# EUROPEAN PATENT SPECIFICATION

(11) **EP 3 032 163 B1**
(45) Date of publication and mention of the grant of the patent: **27.02.2019**
(21) Application number: 14306999.5
(22) Date of filing: 11.12.2014
(51) Int. Cl.: F17C 7/04

(54) **Method and apparatus for controlling the evaporation of a liquefied gas**
Verfahren und Vorrichtung zur Steuerung der Verdampfung eines Flüssiggases
Procédé et appareil de régulation de l'évaporation d'un gaz liquéfié

(43) Date of publication of application: 15.06.2016
(73) Proprietor: L'AIR LIQUIDE, SOCIETE ANONYME POUR L'ETUDE ET L'EXPLOITATION DES PROCEDES GEORGES CLAUDE, 75007 Paris (FR); Air Liquide B.V., 5652 AG Eindhoven (NL)
(72) Inventor: Putman, Eric, 5652 AG EINDHOVEN (NL)
(74) Representative: Mellul-Bendelac, Sylvie Lisette

(56) References cited:
- EP-A1- 2 309 165
- WO-A1-2010/009371
- US-A- 5 921 090
- US-A1- 2003 019 219

## Description

Subject matter of the present invention is a method and an apparatus for controlling the evaporation of a liquefied gas.
The document EP-2 309 165 illustrates the state of the art of this technical domain, and relates to a method and an apparatus for converting liquefied natural gas to a superheated fluid.

Frequently, in particular in commercial applications, situations exist in which a room or the like is to be cooled, e. g. to avoid fouling or riping of fruits, vegetables, dairy products or other food whereas other rooms or the like have to be heated, like e. b. offices, green houses or the like. Sources of abundant energy, e. g. geothermal sources, get more and more common. On the same time, conventional chillers are used for cooling without the use of the waste energy of this chillers. As sustainability gets more and more important it is a desire to reduce waste of energy.
Therefore, it is an object of the present invention to overcome the problems known from prior art at least in part and in particular to provide a method and an apparatus for controlling the evaporation of a liquefied gas in which the enthalpies of a cooling and a heating cycle are used most efficiently.
These problems are solved by the subject matter of the independent claims. The respective dependent claims are directed to embodiments of the invention. It should be noted that the features specified individually in the patent claims may be combined with one another in any desired technological reasonable way and form further embodiments of the invention. The specification, in particular in connection with the figures, explains the invention further and specifies particularly preferred variants of the invention.
According to the present invention a method for controlling the evaporation of a liquefied gas is proposed, wherein the gas is evaporated using heat from both the following sources:
a) a cooling cycle in which heat exchange medium is guided through a first heat exchanger for cooling; and
b) a heating cycle in which heat exchange medium is guided through a second heat exchanger in thermal contact with an external heat source,
wherein the gas is guided through a third heat exchanger in which it is in thermal contact with heat exchange medium from both the following sources:
a) the cooling cycle; and
b) the heating cycle,
wherein a cooling flow of heat exchange medium in the cooling cycle is controlled depending on the cooling needs in the cooling cycle, whereas a heating flow of heat exchange medium in the heating cycle is controlled depending on
A) the necessary thermal energy to evaporate the gas in the third heat exchanger; and
B) the thermal energy of the cooling flow.

The method according to the present invention is in particular useful, if an external heat source is present which provides a steady supply of thermal energy. Examples for such external heat sources are e. g. geothermal heat sources, heat pumps, waste heat e. g. from burning fossil fuels or from other technical processes. Further, it is preferable to use the invention if e. g. a permanent or temporary cooling cycle is necessary, e. g. if goods like food, fruits, vegetables or the like have to be cooled for conservation, e. g. depending on the ambient temperature. In these cases it is advantageous, to use the enthalpy of evaporation of the liquefied gas to cool the heat exchange medium in the cooling cycle as this reduces energy which would have to be introduced from other sources to cool the heat exchange medium significantly. The use of an external heat source with steady supply of thermal energy allows to use some of its heat to evaporate the liquefied gas if it is not necessary to cool the heat exchange medium in the cooling cycle.

In general, the method according to the present invention can be used with any liquefied gas that needs to be evaporated. Preferred are the use with liquefied nitrogen, carbon dioxide, helium, argon, oxygen, hydrogen, ammoniac. In particular, the invention can be used in the operation of green houses with carbon dioxide as here carbon dioxide is frequently used for fertilization in the green houses. In this context an evaporation of the carbon dioxide is necessary, as the introduction of liquid carbon dioxide would lead to inhomogeneous temperature distributions and could even lead to a damage of the plants in the green house. In this application it is even advantageous to raise the temperature of the gas after evaporation to avoid condensation of ambient water which might be undesired in green houses as this leads to a drop of air moisture which is usually controlled to be in a close specific range. Therefore, in such an application a drop of air moisture by condensation is undesirable.

The heat exchange medium is preferably a cryogenic agent used for transferring enthalpy within the cooling and/or heating cycle. Preferably, both the cooling cycle and the heating cycle are driven with the identical heat exchange medium. It is particular advantageous if the heat exchange medium for the cooling cycle and/or the heating cycle comprises water, preferably with an addition of anti-freezing agent like glycerine, ehtylenglycol, ethanol or the like for enlarging the temperature range in which the cooling cycle and/or heating cycle can be driven.

Preferably, the cooling cycle is used for cooling at least one cooling space. This can e. g. cover a cold room, a cold store or the like. Further examples for cooling spaces are e. g. rooms or houses which are not used for storing goods but which are climatized for improving the living or working conditions within.

The necessary thermal energy to evaporate the gas in the third heat exchanger can preferably be calculated based on the known flow of gas, the temperature of the cooling cycle when entering the third heat exchanger and/or the temperature of the heating cycle when entering the third heat exchanger.

According to an improvement of the invention the cooling flow and the heating flow are controlled such that the temperature of the gas when leaving the third heat exchanger is above a predetermined reference temperature.

This allows not only to evaporate the liquefied gas but to ensure a specific temperature level of the gas when leaving the third heat exchanger. The reference temperature is e. g. preferably be chosen such that a condensation of the gas after evaporation can be avoided.

According to a further improvement the external heat source comprises at least one of the following:
i) a geothermal heat source;
ii) industrial waste heat;
iii) community heat;
iv) a solar water heater;
v) a heat pump; and
vi) a process liquid.

Geothermal heat sources get more and more commonly accepted and due the steady decrease of costs for setting up geothermal heat sources, which comprises usually one or more thermal probes which are either introduced into a bore in the soil or which are in a planar configuration. When using one or more thermal probes in a respective number of bores a heat exchange medium is in use pumped through the thermal probe to be heated up in thermal contact with the soil in the deep. In planar configurations heating up of the heat exchange medium in the thermal probe is usually reached using heat generated by solar radiation. Other configurations are possible within the disclosure of this document. The term geothermal heat sources covers applications as well in which volcanic heat is transferred to a heat exchange medium using appropriate heat exchange mechanism.

Industrial waste heat is understood to cover heat that is generated by an industrial and/or technological process which is not used to drive the process itself, which might in particular to be dissipated to allow a continuation of the process. By way of example the term industrial waste heat covers waste heat of chemical reactions, of combustion process, either in internal combustion engines or in general burning processes like e. g. waste combustions or waste heat of crematories or the like, or waste heat recycled from the exhaust gas e. g. of heating installations or the like.

Community heat is a known kind of energy transfer by which heat is generated centrally, e. g. by using a cogeneration of heat and power. In such cases the heat is transferred using a heat exchange medium, e. g. warm water.

A solar water heater is understood as a system in which water is heated by solar energy. In a collector a heat exchange medium, e. g. water, is heated by solar radiation. The heat exchange medium is pumped through the solar water heater or is driven by convection through the solar water heater.

A heat pump is understood as a device providing heat energy from a heat source to a destination. Heat pumps are usually designed to move thermal energy opposite to the direction of spontaneous heat flow by absorbing heat from a cold space and releasing it to a warmer one. The heat sink comprises preferably air, ground heat and/or exhaust air as a source of heat.

Frequently, in particular in exothermic processes, a process liquid is generated that has to be cooled. This is one of the preferred heat sources according to the present invention.

In a further preferred embodiment the heating cycle can be connected to the cooling cycle to allow heating in the first heat exchanger.

According to a further aspect of the present invention an apparatus for controlling the evaporation of a liquefied gas is proposed, said apparatus comprising
a) a cooling loop for guiding a cooling cycle in which heat exchange medium is guidable through a first heat exchanger for cooling; and
b) a heating loop for guiding a heating cycle in which heat exchange medium is guidable through a second heat exchanger in thermal contact with an external heat source,
c) a control means for controlling the flow of heat exchange medium in the cooling cycle and in the heating cycle,
wherein the gas is guidable through a third heat exchanger in which it is in thermal contact with heat exchange medium from both the following sources:
a) the cooling cycle; and
b) the heating cycle,
wherein the control means is adapted to control the flow of heat exchange medium in the cooling cycle depending on the cooling needs in the cooling cycle, and to control the flow of heat exchange medium in the heating cycle depending on
A) the necessary thermal energy to evaporate the gas in the third heat exchanger; and
B) the thermal energy of the cooling flow.

The apparatus according to the present invention can in particular be used with the method according to the present invention. In particular, the control means is set up and defined to perform the method according to the invention. In the apparatus according to the present invention both the cooling loop and the heating loop are part of the third heat exchanger. In use the heat exchange medium is guided as the cooling cycle through the cooling loop. Part of the cooling loop can be a first conveying means for conveying the heat exchange medium through the cooling loop. Preferably, the first conveying means comprises a pump. In use the heat exchange medium is guided as the heating cycle through the heating loop. Part of the heating loop can be a second conveying means for conveying the heat exchange medium through the heating loop. Preferably, the second conveying means comprises a pump.

The necessary thermal energy to evaporate the gas in the third heat exchanger can preferably be calculated based on the known flow of gas, the temperature of the cooling cycle when entering the third heat exchanger and/or the temperature of the heating cycle when entering the third heat exchanger. Preferably, the apparatus comprises means for determining the temperature of the heat exchange medium in the cooling cycle and/or the heating cycle when entering the third heat exchanger, said means for determining the temperature being in data connection with the control means. Said data connection - as all data connections within this document - is preferably realized using a wire connection, whereas a wireless connection is possible within the invention as well. Via a data connection data, preferably measurement data, can be provided to the control means. Means for determining the temperature within this document comprise preferably one or more temperature sensors like PT 100 sensors or sensors made from material with a negative temperature coefficient or materials having a positive temperature coefficient.

According to an improvement further the apparatus is further comprising means for determining the temperature of the gas flow downstream the third heat exchanger, said means being in data connection with the control means.

By measuring the temperature of the gas flow downstream the third heat exchanger this temperature can be used as a control variable in the control means to control the flow of heat exchange medium in the cooling cycle and/or the heating cycle.

According to a further improvement the external heat source comprises at least one of the following:
i) a geothermal heat source;
ii) industrial waste heat;
iii) community heat;
iv) a solar water heater;
v) a heat pump; and
vi) a process liquid.

According to a further improvement said apparatus comprises connecting means for connecting the cooling loop and the heating loop.

Said connecting means include in particular valves. It is possible that the connecting means comprise tubing as well. The connecting means allow the heat exchange medium in the cooling loop to flow through the heating loop as well and vice versa.

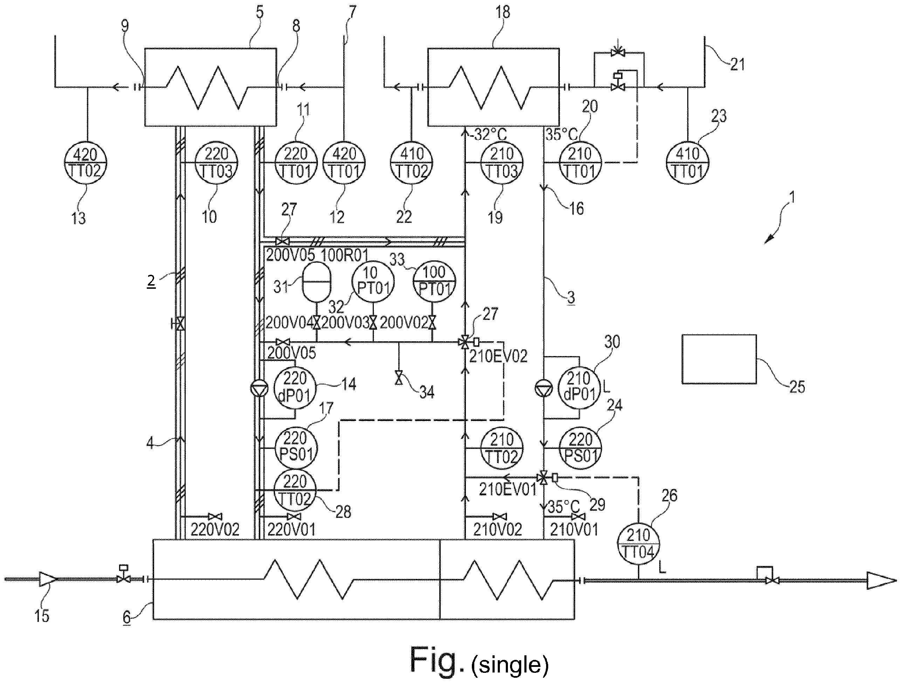

A particularly preferred variant of the invention and also the technical field will now be explained in more detail on the basis of the sole figure.

The sole figure displays a schematic sketch of an apparatus 1 for controlling the evaporation of a liquefied gas. Based on this sketch in the following both the apparatus 1 as well as the method according to the present invention will be described in detail. The apparatus 1 comprises a cooling loop 2 and a heating loop 3.

Through the cooling loop 2 which comprises a respective tubing a cooling cycle 4 is guided. This cooling cycle 4 comprises a heat exchange medium, in this embodiment water with the addition of an anti-freezing agent. In a usual mode of use the heat exchange medium passes as the cooling cycle 4 through the cooling loop 2 through a first heat exchanger 5 and downstream in the direction of flow through a third heat exchanger 6. In this mode the heat exchange medium is colder when entering the first heat exchanger 5 as when leaving the first heat exchanger 5. By this, the secondary cooling stream 7 passing through the first heat exchanger 5 can be cooled so that the temperature of the secondary cooling stream 7 at an input 8 of the first heat exchanger 5 is higher than at an exit 9 of the first heat exchanger 5. The temperature in the cooling loop 2 upstream of the first heat exchanger 5 is measured using a means 10 for determining the temperature and downstream of the first heat exchanger 5 by a means 11 for determining the temperature. The temperature of the secondary cooling stream 7 is measured upstream the first heat exchanger 5 with a means 12 for determining the temperature, whereas downstream of the heat exchanger 5 the temperature is measured using a means 13 for determining the temperature. All means 10, 11, 12, 13 (and the further means for determining the temperature mentioned below) are preferably Pt100 temperature sensors, a kind of resistance temperature detector using platinum. The cooling cycle 4 and the secondary cooling stream 7 are in thermal contact with each other but do not mix.

Downstream the first heat exchanger 5 in the cooling loop 2 is a first conveying means 14 which is in this example a pump for conveying the heat exchange medium through the cooling loop 3. Downstream the first conveying means 14 the cooling cycle 4 passes through the third heat exchanger 6 to continue to the first heat exchanger 5 again downstream the third heat exchanger 6. The temperature of the heat exchange medium is decreasing when passing the third heat exchanger 6. The temperature directly upstream of the third heat exchanger 6 is measured using a means 28 for determining the temperature. The energy to decrease the temperature of the heat exchange medium while passing the third heat exchanger 6 is originating from the evaporation enthalpy of the liquefied gas 15 passing concurrently through the third heat exchanger 6. The presence of flow in the cooling loop 2 is monitored by a means 17 to detect the presence of flow in the cooling loop 2. This means 17 is in this example a calorimetric flow sensor. The measurement is based on the cooling of a temperature sensor, which is heated to a predetermined temperature. Depending on the mass flow of fluid around the temperature sensor the same is cooled and this temperature difference is used to measure the mass flow of liquid.

Further, the apparatus 1 comprises a heating loop 3 the tubing of which guides a heating cycle 16. The heating cycle 16 passes in a heating mode a second heat exchanger 18. Before entering the second heat exchanger 18 the heat exchange medium, in this example water with an addition of anti-freezing agent, in the heating cycle has a lower temperature, being determined by a means 19 for determining the temperature, than when leaving the second heat exchanger 18, said temperature being determined by a means 20 for determining the temperature.

In the second heat exchanger 18 the heat exchanging medium in the heating cycle 16 is in thermal contact with a secondary heating stream 21 which is heated by an external heat source, in this example a geothermal heat source. The temperature of the secondary heating stream 21 decreases when passing the second heat exchanger 18, whereas the temperature of the secondary heating stream 21 downstream the second heat exchanger 18 is measured by a means 22 for determining the temperature, whereas the temperature of the secondary heating stream 21 upstream the second heat exchanger 18 can be measured using a means 23 for determining the temperature. The heating cycle 16 and the secondary heating stream 21 are in thermal contact but do not intermix.

Downstream the second heat exchanger 18 in the heating loop 3 a second conveying means 30, here a pump, is disposed for conveying the heating cycle 16 through the heating loop 3. The presence of flow in the heating loop 3 is monitored using a means for determining the presence of flow 24 whereas the temperature is measured by the means 20 for determining the temperature. The temperature of the heat exchange medium in the heating cycle 16 decreases when passing the third heat exchanger 6. At the same time the temperature of the gas 15 in the third heat exchanger 6 increases. The heating cycle 16 is downstream the third heat exchanger 6 guided through the heating loop 3 back to the second heat exchanger 18. The third heat exchanger 6 can be a single heat exchanger 6 with two zones one being in thermal contact with the cooling cycle 4, one being in thermal contact with the heating cycle 16. Nevertheless, it is possible to use two distinct heat exchangers being coupled sequentially one being in thermal contact with the cooling cycle 4, one being in thermal contact with the heating cycle 16.

Further, the apparatus comprises a control means 25, which can be a computer or the like, which is in data connection at least with the means 10, 11, 12, 13, 19, 20, 22, 23, 28 for determining the temperature, the conveying means 14 in the cooling loop 2 and the conveying means 24 in the heating loop 3. Data connection means that data can be transferred to and from the control means 25 and that the control means 25 can control e. g. the conveying means 14, 24 via the data connection. The data connection can be realized by wire or wireless.

The control means 25 realizes the method according to the present invention with the other elements of the apparatus 1. This means that the cooling flow of heat exchange medium in the cooling cycle 4 is controlled by the control means 25 in dependence of the cooling needs in the cooling cycle 4. The latter is determined by the temperature to be reached e. g. in a cooling room which is cooled, directly or indirectly, by the secondary cooling stream 7. Therefore, a target cooling temperature is set in the secondary cooling stream 7 to be realized downstream the first heat exchanger 5. Depending on this target cooling temperature the volume flow of the cooling cycle 4 is determined by the control means 25 and the respective conveying device 14 in the cooling loop 2 is controlled accordingly.

Depending on the known volume flow of the cooling cycle 4 and the known temperature and volume flow of the liquefied gas 15 the control means 25 is able to determine the necessary energy input into the gas 15 to ensure a) the complete evaporation of the gas 15 and b) to manage to have the gas reach a predetermined reference temperature when exiting the third heat exchanger 6. This predetermined reference temperature is determined to ensure that no condensation of water takes place when the gas 15 - in the present example carbon dioxide - enters greenhouses downstream the third heat exchanger 6. E. g. the predetermined reference temperature is 20°C [centigrade] and above.

Depending on the necessary energy input the control means 25 controls the conveying means 24 in the heating loop 3 accordingly to ensure a volume flow of heat exchange medium in the heating cycle 16 to be high enough to ensure evaporation and, if applicable, that the gas reaches the predetermined reference temperature. The temperature of the gas downstream the third heat exchanger 6 is determined by means 26 to determine the temperature. This means 26 is in data connection with the control means 25 as well. Further, a three-way valve 29 as a connecting means is disposed in the heating loop 3 to allow connecting the heating loop 3 with the cooling loop 2 and to control the preset gas temperature being determined by means 26 to control the temperature with a predeterminable level of preciseness, i. e. to be ±20 °C. The three-way valve 29 is in data connection with the control means 25as are the means 17, 24 for determining the presence of flow as well.

The heating flow of the heat exchange medium is thus at least controlled depending on the necessary thermal energy to evaporate the gas 15 in the third heat exchanger 6 and/or the thermal energy of the cooling flow.

Further, apparatus 1 comprises connecting means 27 being a three-way valve for connecting the cooling loop 2 and the heating loop 3. This connecting means 27 is controlled by the control means 25 as well. If it is necessary to heat in the first heat exchanger the warmer heat exchange medium in the heating cycle 16 can be introduced into the cooling cycle 4 via the connecting means 27 which is in the present example three-way valves. For this, the temperature of the heat exchange medium in the cooling loop 2 before entering the third heat exchanger 6 is controlled by means 28 for determining the temperature and the connecting means 27 in the control means 25. If the temperature drops below a preset temperature at means 28 for determining the temperature, i. e. the energy input of the secondary cooling stream 7 drops, the connecting means 27 will be opened to allow a heat transfer from the heating loop 3 into the cooling loop 2 and thus into the cooling cycle 4.

Further, the apparatus 1 comprises an expansion vessel 31, a pressure gauge 32, and a pressure transmitter 33. The pressure transmitter 33 is in data connection with control means 25 and transfers the current pressure values to the control means 25. By this equipment it is possible to control the pressure in both the cooling loop 2 and the heating loop 3. Pressure is preferably maintained at a level of 1 to 2 bar gauge [pressure above ambient pressure]. Both the cooling loop 2 and the heating loop 3 can be filled via the filling valve 34.

By use of the method and the apparatus 1 described herein it is possible to use the shown cooling cycle 4 instead of electrical chillers or the like to cool the water in the secondary cooling cycle 7. This leads to a significant reduction of costs for the use of the apparatus 1 compared to conventional techniques.

### Reference numerals

- 1: apparatus for controlling the evaporation of a liquefied gas
- 2: cooling loop
- 3: heating loop
- 4: cooling cycle
- 5: first heat exchanger
- 6: third heat exchanger
- 7: secondary cooling stream
- 8: input of first heat exchanger
- 9: exit of first heat exchanger
- 10, 11, 12, 13: means for determining the temperature
- 14: first conveying means
- 15: liquefied gas
- 16: heating cycle
- 17: means for determining the presence of flow
- 18: second heat exchanger
- 19, 20: means for determining the temperature
- 21: secondary heating stream
- 22, 23: means for determining the temperature
- 24: means for determining the presence of flow
- 25: control means
- 26: means for determining the temperature
- 27: connecting means
- 28: means for determining the temperature
- 29: three way valve
- 30: second conveying means
- 31: expansion vessel
- 32: pressure gauge
- 33: pressure transmitter
- 34: filling valve

## Claims

1. Method for controlling the evaporation of a liquefied gas,
wherein the gas is evaporated using heat from both the following sources:
a) a cooling cycle (4) in which heat exchange medium is guided through a first heat exchanger (5) for cooling; and
b) a heating cycle (16) in which heat exchange medium is guided through a second heat exchanger (18) in thermal contact with an external heat source (21),
wherein the gas is guided through a third heat exchanger (6) in which it is in thermal contact with heat exchange medium from both the following sources:
a) the cooling cycle (4), and
b) the heating cycle (16),
wherein a cooling flow of heat exchange medium in the cooling cycle is controlled depending on the cooling needs in the cooling cycle, whereas a heating flow of heat exchange medium in the heating cycle is controlled depending on :
A) the necessary thermal energy to evaporate the gas in the third heat exchanger (6); and
B) the thermal energy of the cooling flow.

2. Method according to claim 1, wherein the cooling flow and the heating flow are controlled such that the temperature of the gas when leaving the third heat exchanger (6) is above a predetermined reference temperature.

3. Method according to one of claims 1 to 2 wherein the external heat source comprises at least one of the following:
i) a geothermal heat source;
ii) industrial waste heat;
iii) community heat;
iv) a solar water heater;
v) a heat pump; and
vi) a process liquid.

4. Method according to one of the preceding claims, wherein the heating cycle (16) can be connected to the cooling cycle (4) to allow heating in the first heat exchanger.

5. Apparatus for controlling the evaporation of a liquefied gas, comprising
a) a cooling loop (2) for guiding a cooling cycle (4) in which heat exchange medium is guidable through a first heat exchanger (5) for cooling; and
b) a heating loop (3) for guiding a heating cycle (16) in which heat exchange medium is guidable through a second heat exchanger (18) in thermal contact with an external heat source (21),
c) a control means (25) for controlling the flow of heat exchange medium in the cooling cycle (4) and in the heating cycle (16),
wherein the gas is guidable through a third heat exchanger (6) in which it is in thermal contact with heat exchange medium from both the following sources:
a) the cooling cycle (4); and
b) the heating cycle (16),
wherein the control means (25) is adapted to control the flow of heat exchange medium in the cooling cycle (4) depending on the cooling needs in the cooling cycle (4), and to control the flow of heat exchange medium in the heating cycle (16) depending on
A) the necessary thermal energy to evaporate the gas in the third heat exchanger (6); and
B) the thermal energy of the cooling flow.

6. Apparatus according to claim 5, further comprising means (26) for determining the temperature of the gas flow downstream the third heat exchanger (6), said means being in data connection with the control means (25).

7. Apparatus according to claim 5 or 6, wherein the external heat source (21) comprises at least one of the following:
i) a geothermal heat source;
ii) industrial waste heat;
iii) community heat;
iv) a solar water heater;
v) a heat pump; and
vi) a process liquid.

8. Apparatus according to one of claims 5 to 7, comprising connecting means (27) for connecting the cooling loop (2) and the heating loop (3).

## Patentansprüche

1. Verfahren zur Steuerung der Verdampfung eines verflüssigten Gases,
wobei das Gas unter Verwendung von Wärme aus beiden der folgenden Quellen verdampft wird:
a) einem Kühlzyklus (4), in dem Wärmeaustauschmedium zur Kühlung durch einen ersten Wärmeaustauscher (5) geführt wird; und
b) einem Heizzyklus (16), in dem Wärmeaustauschmedium durch einen zweiten Wärmeaustauscher (18) in thermischem Kontakt mit einer externen Wärmequelle (21) geführt wird;
wobei das Gas durch einen dritten Wärmeaustauscher (6) geführt wird, in dem es mit Wärmeaustauschmedium aus beiden der folgenden Quellen in thermischem Kontakt steht:
a) dem Kühlzyklus (4) und
b) dem Heizzyklus (16),
wobei ein Kühlstrom eines Wärmeaustauschmediums in dem Kühlzyklus in Abhängigkeit von den Kühlanforderungen in dem Kühlzyklus gesteuert wird, während ein Heizstrom von Wärmeaustauschmedium in dem Heizzyklus in Abhängigkeit von Folgendem gesteuert wird:
A) der notwendigen thermischen Energie, um das Gas im dritten Wärmeaustauscher (6) zu verdampfen; und
B) der thermischen Energie des Kühlstroms.

2. Verfahren nach Anspruch 1, wobei der Kühlstrom und der Heizstrom so gesteuert werden, dass die Temperatur des Gases beim Verlassen des dritten Wärmeaustauschers (6) oberhalb einer vorbestimmten Referenztemperatur liegt.

3. Verfahren nach einem der Ansprüche 1 bis 2, wobei die externe Wärmequelle mindestens eines von Folgendem umfasst:
i) einer geothermischen Wärmequelle;
ii) industrieller Abwärme;
iii) Fernwärme;
iv) einem Solarwarmwasserbereiter;
v) einer Wärmepumpe; und
vi) einer Prozessflüssigkeit.

4. Verfahren nach einem der vorstehenden Ansprüche, wobei der Heizzyklus (16) mit dem Kühlzyklus (4) verbunden werden kann, um ein Erwärmen im ersten Wärmeaustauscher zu ermöglichen.

5. Vorrichtung zur Steuerung der Verdampfung eines verflüssigten Gases, umfassend
a) eine Kühlschleife (2) zum Führen eines Kühlzyklus (4), in dem Wärmeaustauschmedium zur Kühlung durch einen ersten Wärmeaustauscher (5) führbar ist; und
b) eine Heizschleife (3) zum Führen eines Heizzyklus (16), in dem das Wärmeaustauschmedium durch einen zweiten Wärmeaustauscher (18) in thermischem Kontakt mit einer externen Wärmequelle (21) führbar ist;
c) ein Steuermittel (25) zum Steuern des Stroms von Wärmeaustauschmedium im Kühlzyklus (4) und im Heizzyklus (16),
wobei das Gas durch einen dritten Wärmeaustauscher (6) führbar ist, in dem es mit Wärmeaustauschmedium aus beiden der folgenden Quellen in thermischem Kontakt steht:
a) dem Kühlzyklus (4); und
b) dem Heizzyklus (16),
wobei das Steuermittel (25) ausgelegt ist, den Strom von Wärmeaustauschmedium im Kühlzyklus (4) je nach Kühlbedarf in dem Kühlzyklus (4) zu steuern und den Strom von Wärmeaustauschmedium in Heizzyklus (16) in Abhängigkeit von Folgendem zu steuern
A) der notwendigen thermischen Energie, um das Gas im dritten Wärmeaustauscher (6) zu verdampfen; und
B) der thermischen Energie des Kühlstroms.

6. Vorrichtung nach Anspruch 5, weiterhin umfassend Mittel (26) zum Bestimmen der Temperatur des Gasstroms stromabwärts des dritten Wärmeaustauschers (6), wobei das Mittel in Datenverbindung mit dem Steuermittel (25) steht.

7. Vorrichtung nach Anspruch 5 oder 6, wobei die externe Wärmequelle (21) mindestens eines von Folgendem umfasst:
i) einer geothermischen Wärmequelle;
ii) industrieller Abwärme;
iii) Fernwärme;
iv) einem Solarwarmwasserbereiter;
v) einer Wärmepumpe; und
vi) einer Prozessflüssigkeit.

8. Vorrichtung nach einem der Ansprüche 5 bis 7, umfassend Verbindungsmittel (27) zum Verbinden der Kühlschleife (2) und der Heizschleife (3).

## Revendications

1. Procédé de commande de l'évaporation d'un gaz liquéfié, dans lequel le gaz est évaporé en utilisant de la chaleur issue des deux sources suivantes :
a) un cycle de refroidissement (4) dans lequel un milieu d'échange de chaleur est guidé à travers un premier échangeur de chaleur (5) pour le refroidissement ; et
b) un cycle de chauffage (16) dans lequel un milieu d'échange de chaleur est guidé à travers un deuxième échangeur de chaleur (18) en contact thermique avec une source de chaleur externe (21), dans lequel le gaz est guidé à travers un troisième échangeur de chaleur (6) dans lequel il est en contact thermique avec un milieu d'échange de chaleur issu des deux sources suivantes :
a) le cycle de refroidissement (4) et
b) le cycle de chauffage (16),
dans lequel un flux de refroidissement du milieu d'échange de chaleur dans le cycle de refroidissement est commandé en fonction des besoins en refroidissement du cycle de refroidissement, tandis qu'un flux de chauffage de milieu d'échange de chaleur dans le cycle de chauffage est commandé en fonction :
A) de l'énergie thermique nécessaire pour évaporer le gaz dans le troisième échangeur de chaleur (6) ; et
B) de l'énergie thermique du flux de refroidissement.

2. Procédé selon la revendication 1, dans lequel le flux de refroidissement et le flux de chauffage sont commandés de sorte que la température du gaz lorsqu'il quitte le troisième échangeur de chaleur (6) se situe au-dessus d'une température de référence prédéterminée.

3. Procédé selon l'une quelconque des revendications 1 à 2, dans lequel la source de chaleur externe comprend au moins l'une des suivantes :
i) une source de chaleur géothermique ;
ii) de la chaleur perdue industrielle ;
iii) de la chaleur communautaire ;
iv) un dispositif de chauffage d'eau solaire, ;
v) une pompe à chaleur ; et
vi) un liquide de traitement.

4. Procédé selon l'une quelconque des revendications précédentes, dans lequel le cycle de chauffage (16) peut être raccordé au cycle de refroidissement (4) pour permettre le chauffage dans le premier échangeur de chaleur.

5. Appareil de commande de l'évaporation d'un gaz liquéfié, comprenant :
a) une boucle de refroidissement (2) pour guider un cycle de refroidissement (4), dans laquelle un milieu d'échange de chaleur peut être guidé à travers un premier échangeur de chaleur (5) pour le refroidissement ; et
b) une boucle de chauffage (3) pour guider un cycle de chauffage (16), dans laquelle un milieu d'échange de chaleur peut être guidé à travers un deuxième échangeur de chaleur (18) en contact thermique avec une source de chaleur externe (21),
c) un moyen de commande (25) pour commander le flux de milieu d'échange de chaleur dans le cycle de refroidissement (4) et le cycle de chauffage (16),
dans lequel le gaz peut être guidé à travers un troisième échangeur de chaleur (6) dans lequel il est en contact thermique avec un milieu d'échange de chaleur issu des deux sources suivantes :
a) le cycle de refroidissement (4) ; et
b) le cycle de chauffage (16),
dans lequel le moyen de commande (25) est à même de commander le flux de milieu d'échange de chaleur dans le cycle de refroidissement (4) en fonction des besoins en refroidissement dans le cycle de refroidissement (4) et de commander le flux de milieu d'échange de chaleur dans le cycle de chauffage (16) en fonction :
A) de l'énergie thermique nécessaire pour évaporer le gaz dans le troisième échangeur de chaleur (6) ; et
B) de l'énergie thermique du flux de refroidissement.

6. Appareil selon la revendication 5, comprenant en outre des moyens (26) pour déterminer la température du flux de gaz en aval du troisième échangeur de chaleur (6), lesdits moyens étant en connexion de données avec les moyens de commande (25).

7. Appareil selon la revendication 5 ou 6, dans lequel la source de chaleur externe (21) comprend au moins l'une des suivantes :
i) une source de chaleur géothermique ;
ii) de la chaleur perdue industrielle ;
iii) de la chaleur communautaire ;
iv) un dispositif de chauffage d'eau solaire ;
v) une pompe à chaleur ; et
vi) un liquide de traitement.

8. Appareil selon l'une quelconque des revendications 5 à 7, comprenant des moyens de raccordement (27) pour raccorder la boucle de refroidissement (2) et la boucle de chauffage (3).
